# EUROPÄISCHE PATENTSCHRIFT

(11) **EP 1 698 532 B1**
(45) Veröffentlichungstag und Bekanntmachung des Hinweises auf die Patenterteilung: **23.03.2011**
(21) Anmeldenummer: 06100001.4
(22) Anmeldetag: 02.01.2006
(51) Int. Cl.: B60S 1/08, G01N 21/45

(54) **Optischer Sensor mit optimierter Sensitivität**
Optical sensor with optimized sensitivity
Détecteur optique ayant une sensibilité optimisée

(30) Priorität: 02.03.2005 DE 102005009424
(43) Veröffentlichungstag der Anmeldung: 06.09.2006
(73) Patentinhaber: ROBERT BOSCH GMBH, 70442 Stuttgart (DE)
(72) Erfinder: Pack, Andreas, 77815, Buehl (DE)

(56) Entgegenhaltungen:
- EP-A- 0 997 360
- US-A- 6 108 084

## Beschreibung

Die Erfindung betrifft einen optischen Sensor zum Detektieren von Beschlag auf einer Oberfläche, insbesondere auf einem Oberflächenbereich einer Windschutzscheibe. Die Erfindung betrifft weiterhin eine Sensoranordnung zum Messen des Maßes des Beschlags auf dem Oberflächenbereich. Die Erfindung betrifft weiterhin ein Verfahren zum Bestimmen eines Maßes des Beschlags auf dem Oberflächenbereich sowie ein Herstellungsverfahren für einen solchen optischen Sensor.

Optische Sensoren zum Detektieren von Beschlag auf einem Oberflächenbereich werden beispielsweise zum Erkennen von Feuchtigkeit auf einer Windschutzscheibe bei einem Kraftfahrzeug eingesetzt. In der Regel basiert die Funktion solcher Sensoren auf dem Prinzip der gestörten Total- oder einfachen Reflexion an einer Grenzfläche. Im Falle der Totalreflexion trifft ein Lichtstrahl unter einem Winkel auf die Windschutzscheibe, der bei trockener Scheibe größer ist als der Winkel der Totalreflexion und wird dann vollständig an der Oberfläche reflektiert und auf einen Detektor gelenkt. Sobald Wassertropfen die Windschutzscheibe benetzen, ändert sich die Bedingung für die Totalreflexion und ein Teil des Lichts wird an der Grenzfläche (Oberfläche) ausgekoppelt, was zu einer Abschwächung des reflektierten Lichtstrahls und damit zu einer Änderung der Lichtstärke führt, die durch einen geeigneten Strahlungsdetektor detektiert werden kann.

Herkömmliche optische Sensoren zur Erkennung von Beschlag auf einer Windschutzscheibe werden üblicherweise im Fahrzeuginnenraum auf der Innenseite der Windschutzscheibe befestigt und beeinträchtigen damit das Sichtfeld des Fahrers. Weitere bekannte Sensoren weisen in der Windschutzscheibe integrierte Hologramme auf, die einen in der Windschutzscheibe geführten Lichtstrahl unter einem geeigneten Winkel auf den Oberflächenbereich richten und anschließend den reflektierten Lichtstrahl wieder in die Lichtführung in der Lichtschutzscheibe einkoppeln. Damit der in dem optischen Sensor verwendete Lichtstrahl den Fahrer des Kraftfahrzeugs möglichst wenig stört, wird ein Lichtstrahl üblicherweise in einem nicht sichtbaren Wellenlängenbereich, insbesondere in einem infraroten Wellenlängenbereich ausgewählt. Da das Glasmaterial der Windschutzscheibe üblicherweise für infrarotes Licht nicht durchlässig ist, bzw. darin sehr stark gedämpft wird, eignet sich die Windschutzscheibe üblicherweise nicht als Lichtwellenleiter für den Messlichtstrahl. Daher wird üblicherweise eine Lichtwellenleiterschicht innerhalb der Windschutzscheibe vorgesehen, in der der Messlichtstrahl geführt wird. Üblicherweise wird dazu die ohnehin in einer Windschutzscheibe vorgesehene PVB-Folie (für den Aufbau von Sicherheitglas notwendig) verwendet. Beim Auskoppeln des Lichtstrahls aus der PVB-Folie mithilfe z.B. einer darauf aufgebrachten holografischen Struktur wird der Lichtstrahl durch das Glasmaterial der Windschutzscheibe an den Oberflächenbereich geführt, dort reflektiert und anschließend durch das Glasmaterial der Windschutzscheibe zu dem Lichtwellenleiter in der Windschutzscheibe geführt und dort eingekoppelt. Da der Lichtstrahl durch das Glasmaterial der Windschutzscheibe geführt wird, wird dieser stark gedämpft, so dass selbst bei vollständiger Reflexion des Lichtstrahls an dem Oberflächenbereich nur ein sehr kleiner Anteil der Lichtstärke des Lichtstrahls wieder in den Lichtwellenleiter eingekoppelt werden kann.

Ein Weg die Empfindlichkeit des optischen Sensors zu optimieren, besteht darin, die Fläche des Oberflächenbereichs möglichst groß auszubilden. Da der Aufwand sehr groß ist, in der Halterung der Windschutzscheibe zum Einkoppen eine weit ausgedehnte Lichtquelle anzuordnen und das emittierte Licht nach Durchgang durch den Lichtwellenleiter in der Windschutzscheibe wieder auf einen Strahlungsdetektor kleiner Größe zu fokussieren, kann die Fläche des Oberflächenbereichs nicht beliebig vergrößert werden.

Eine weitere Möglichkeit besteht darin, die Größe der Fläche des Oberflächenbereichs, an dem der Beschlag an der Windschutzscheibe gemessen wird, zu erhöhen, indem mehrere Oberflächenbereiche vorgesehen werden. Der Lichtstrahl wird dabei mehrfach aus dem Lichtwellenleiter in der Windschutzscheibe ausgekoppelt und nach der Reflexion wieder eingekoppelt. Dies reduziert jedoch aufgrund der Dämpfung des Lichtstrahls in dem Glasmaterial der Windschutzscheibe sehr stark die zu detektierende Lichtstärke des Lichtstrahls. Nach nur einer einzigen Auskopplung und Wiedereinkopplung kann bei manchen Glasmaterialien die Lichtintensität auf 1% der ursprünglichen Lichtintensität abfallen. Nach einer zweiten Auskopplung und Wiedereinkopplung hätte man aufgrund des exponentiellen Absorptionsgesetzes nur noch 0,01 % der Lichtintensität, die nur mit aufwändigen Strahlungsdetektoren zu detektieren wären. Hinzu kommt, dass die Strahlungsdetektoren bei solchen Lichtstärken nicht in einem geeigneten Arbeitsbereich betrieben werden können.

Dokument EP-A-0 997 360 offenbart ein optischer Sensor gemäß das erste Teil des Anspruchs 1.

Es ist Aufgabe der vorliegenden Erfindung, einen optischen Sensor zur Verfügung zu stellen, mit dem eine Sensoranordnung mit vergrößerter Fläche des Oberflächenbereichs, auf dem ein Maß eines Beschlags gemessen werden soll, aufgebaut werden kann. Es ist weiterhin Aufgabe der vorliegenden Erfindung, eine Sensoranordnung zur Verfügung zu stellen, die einen vergrößerten Oberflächenbereich aufweist.

Es ist weiterhin Aufgabe der vorliegenden Erfindung, ein Verfahren zum Messen des Maßes eines Beschlags auf einem Oberflächenbereich zur Verfügung zu stellen. Weiterhin ist es Aufgabe der vorliegenden Erfindung, ein Verfahren zum Herstellen eines solchen optischen Sensors bereitzustellen.

Diese Aufgabe wird durch den optischen Sensor nach Anspruch 1, die Sensoranordnung nach Anspruch 6, das Verfahren zum Bestimmen einer Messgröße nach Anspruch 8, sowie durch das Verfahren zur Herstellung eines optischen Sensors nach Anspruch 10 gelöst.

Weitere vorteilhafte Ausgestaltungen der Erfindung sind in den abhängigen Ansprüchen angegeben.

Gemäß einem ersten Aspekt der vorliegenden Erfindung ist ein optischer Sensor zum Detektieren von Beschlag auf einem Oberflächenbereich, insbesondere auf einem Bereich einer Windschutzscheibe, vorgesehen. Der Sensor weist einen Lichtwellenleiter zum Führen eines Lichtstrahls und einen Auskopplungsbereich zum Auskoppeln des Lichtstrahls aus dem Lichtwellenleiter auf. Der ausgekoppelte Lichtstrahl wird abhängig von einem Maß an Beschlag auf dem Oberflächenbereich reflektiert. Es ist ferner ein Einkopplungsbereich zum Einkoppeln des reflektierten Lichtstrahls in den Lichtwellenleiter vorgesehen. Erfindungsgemäß ist der Auskopplungsbereich so gestaltet, dass nur ein vorbestimmter Anteil des im Lichtwellenleiter geführten Lichtstrahls zum Reflektieren an dem Oberflächenbereich ausgekoppelt wird und ein weiterer Anteil des geführten Lichtstrahls im Lichtwellenleiter verbleibt.

Der optische Sensor hat den Vorteil, dass die Lichtstärke des Lichtstrahls hinter dem optischen Sensor gegenüber der Lichtstärke des ursprünglich eingekoppelten Lichtstrahls nicht zu stark gedämpft ist, so dass auf eine sehr starke Lichtquelle zur Erzeugung des Lichtstrahls, bzw. auf einen sehr empfindlichen Strahlungsdetektor verzichtet werden kann und der Strahlungsdetektor in einem optimalen Arbeitsbereich betrieben werden kann. Weiterhin ist es möglich, dass der hinter dem optischen Sensor verbleibende Anteil des geführten Lichtstrahls einem weiteren optischen Sensor zugeführt werden kann, ohne dass die Lichtstärke des erneut ausgekoppelten Lichtstrahls so klein wird, dass sie nicht oder nur mit sehr aufwändigen Maßnahmen detektiert werden kann.

Gemäß einer weiteren Ausführungsform kann der Auskopplungsbereich eine Tunnelstruktur aufweisen, die auf dem Lichtwellenleiter angeordnet ist. Die Tunnelstruktur ist so gestaltet, dass eine evaneszente Welle ausgebildet wird, wobei die Dicke der Tunnelstruktur so gewählt ist, dass nur der bestimmte Anteil des im Lichtwellenleiter geführten Lichtstrahls ausgekoppelt wird. Das Vorsehen einer Tunnelstruktur stellt eine besonders einfache Weise dar, eine nur anteilige Auskopplung des geführten Lichtstrahls zu erreichen. Dabei lässt sich durch Einstellen der Dicke der vorbestimmte Anteil des auszukoppelnden Lichtstrahls sehr exakt einstellen.

Vorzugsweise ist der Lichtwellenleiter zwischen zwei Glasscheiben angeordnet, wobei der Lichtwellenleiter so gestaltet ist, dass er sich zum im wesentlichen verlustfreien Leiten von Licht in einem infraroten Wellenbereich eignet. Insbesondere umfasst der Lichtwellenleiter eine PVB-Schicht.

Gemäß einer bevorzugten Ausführungsform der vorliegenden Erfindung kann der Auskopplungsbereich einen Ablenkbereich umfassen, der den ausgekoppelten Lichtstrahl in Richtung des Oberflächenbereichs ablenkt. Insbesondere kann der Ablenkbereich eine holographische Struktur aufweisen, um den Lichtstrahl abzulenken. Der Ablenkbereich dient dazu, den je nach Ausgestaltung des Auskopplungsbereichs in eine bestimmte Richtung verlaufenden ausgekoppelten Lichtstrahl umzulenken, so dass dieser unter einem geeigneten Winkel auf den Oberflächenbereich auftrifft, so dass der Lichtstrahl dort entweder reflektiert wird oder bei Vorhandensein von Feuchtigkeit oder Beschlag auf dem Oberflächenbereich den Oberflächenbereich durchdringt.

Gemäß einem weiteren Aspekt der vorliegenden Erfindung ist eine Sensoranordnung mit mehreren derartigen Sensoren vorgesehen, wobei die Sensoren in Strahlrichtung des Lichtstrahls an einem gemeinsamen Lichtwellenleiter in Reihe angeordnet sind. Eine solche Sensoranordnung hat den Vorteil, dass durch das Vorsehen von mehreren Sensoren die Fläche des Oberflächenbereichs auf dem ein Maß eines Beschlags gemessen werden soll, vergrößert werden kann, ohne dass die Lichtstärke aufgrund der Dämpfung beim Durchgang durch z.B. das Glasmaterial der Windschutzscheibe zu stark abnimmt, um von einem herkömmlichen Strahlungsdetektor mit einer vorgegebenen Empfindlichkeit und einem vorbestimmten Arbeitsbereich detektiert werden zu können. Die vorgeschlagene Sensoranordnung ermöglicht es, dass jeder der in Reihe angeordneten Sensoren nur einen Anteil des Lichtstrahls auskoppelt und einen von diesem Anteil und von dem Maß an Beschlag auf den Oberflächenbereich abhängigen Anteil des Lichtstrahls wieder in den gemeinsamen Lichtwellenleiter einkoppelt.

Die Sensoranordnung kann ein Lichteinkopplungsende zum Einkoppeln des Lichtstrahls und ein Lichtauskopplungsende zum Auskoppeln aufweisen, wobei das Lichtauskopplungsende mit einem Strahlungsdetektor verbunden ist, um die Lichtintensität des an dem Auskopplungsende empfangbaren Lichtstrahls abhängig von dem Maß des Beschlags der Oberfläche zu messen.

Da nur ein vorbestimmter Anteil des Lichtstrahls aus dem Lichtwellenleiter ausgekoppelt wird, um diesen dem Oberflächenbereich zuzuführen, kann die Lichtstärke des in dem Lichtwellenleiter verbleibenden Lichtstrahls so eingestellt werden, dass die Lichtstärke des Lichtstrahls, der von dem Strahlungsdetektor empfangen wird, möglichst in einem optimalen Arbeitsbereich des Strahlungsdetektors liegt.

Gemäß einem weiteren Aspekt der vorliegenden Erfindung ist ein Verfahren zum Bestimmen eines Maßes eines Beschlags auf einem Oberflächenbereich vorgesehen. Das Verfahren umfasst die Schritte des Bereitstellens eines Lichtstrahls in einer Strahlführung, des Auskoppelns eines vorbestimmten Anteils des Lichtstrahls, so dass der ausgekoppelte Lichtstrahl an einem Oberflächenbereich reflektiert wird, wobei der reflektierte Anteil des Lichtstrahls von einem Maß des Beschlags abhängt, des Zusammenführens des nicht ausgekoppelten Anteils des Lichtstrahls und des reflektierten Anteils des Lichtstahls, um einen zusammengeführten Lichtstrahl zu erhalten und des Bestimmens des Maßes für den Beschlag abhängig von einer Messgröße des zusammengeführten Lichtstrahls.

Das erfindungsgemäße Verfahren bewirkt, dass ein Anteil des Lichtstrahls nicht aus dem Lichtwellenleiter ausgekoppelt wird, so dass dieser für die Messung eines Beschlags an einem weiteren Oberflächenbereich zur Verfügung steht und dazu dient, die Detektion der Lichtstärke des Lichtstrahls in einem optimalen Arbeitsbereich zu betreiben.

Gemäß einer bevorzugten Ausführungsform werden die Schritte des Auskoppelns des vorbestimmten Anteils des Lichtstrahls, des Reflektierens des Lichtstrahls an einem Oberflächenbereich und des Zusammenführens des nicht ausgekoppelten Anteils des Lichtstrahls und des reflektierten Anteils des Lichtstrahls mehrfach für mehrere Oberflächenbereiche durchgeführt, wobei der jeweils bereitgestellte Lichtstrahl in einer nachfolgenden Stufe dem zusammengeführten Lichtstrahl der vorhergehenden Stufe entspricht. Durch geeignete Wahl des vorbestimmten Anteil des Lichtstrahls, der ausgekoppelt wird, stehen für jeden der Oberflächenbereiche eine ausreichende Lichtstärke zur Verfügung, um die Messung vorzunehmen, und es verbleibt ein ausreichender Anteil in der Strahlführung, um die Detektion der Lichtstärke des Lichtstrahls in einem optimalen Arbeitsbereich betreiben zu können.

Gemäß einem weiteren Aspekt der vorliegenden Erfindung ist ein Verfahren zur Herstellung eines optischen Sensors vorgesehen. Das Verfahren umfasst die Schritte des Bereitstellens eines Lichtwellenleiters, des Aufbringens einer Tunnelschicht auf den Lichtwellenleiter zum Bilden des Auskopplungsbereiches, wobei die Dicke der Tunnelschicht so gewählt wird, dass nur ein vorbestimmter Anteil des im Lichtwellenleiter geführten Lichtstrahls zum Reflektieren an dem Oberflächenbereich ausgekoppelt wird, und des Anordnens eines transparenten Materials auf den Lichtwellenleiter und auf die Tunnelschicht, wodurch der Oberflächenbereich gebildet wird, auf den der auszukoppelnde Lichtstrahl gerichtet ist.

Das erfindungsgemäße Herstellungsverfahren hat den Vorteil, dass auf einfache Weise ein Auskopplungsbereich zum Auskoppeln nur eines vorbestimmten Anteils des geführten Lichtstrahls vorgesehen werden kann, indem die Dicke der Tunnelschicht so eingestellt wird, dass sich in der Tunnelschicht eine evaneszente Welle bildet, so dass durch einen optischen Tunneleffekt nur ein vorbestimmter Anteil des geführten Lichtstrahls ausgekoppelt wird.

Es kann weiterhin vorgesehen sein, dass nach dem Aufbringen der Tunnelschicht und vor dem Anordnen des transparenten Materials eine Ablenkstruktur vorgesehen wird, um den ausgekoppelten Lichtstrahl auf den Oberflächenbereich zu lenken. Insbesondere kann die Ablenkstruktur eine holographische Struktur aufweisen, womit in einfacher Weise eine Ablenkung des ausgekoppelten Lichtstrahls erreicht werden kann.

Bevorzugte Ausführungsformen der vorliegenden Erfindung werden nachfolgend anhand der beigefügten Zeichnungen näher erläutert. Es zeigen:
Figur 1 eine optische Sensoranordnung zur Messung von Beschlag auf einer Windschutzscheibe gemäß dem Stand der Technik;
Figur 2 eine optische Sensoranordnung zur Messung von Beschlag auf einer Windschutzscheibe gemäß einer bevorzugten Ausführungsform der Erfindung;
Figur 3 eine Schnittansicht durch den Auskopplungsbereich der Sensoranordnung nach Figur 2; und
Figur 4 eine schematische Darstellung von mehreren optischen Sensoren für eine Sensoranordnung gemäß einer weiteren Ausführungsform der Erfindung.

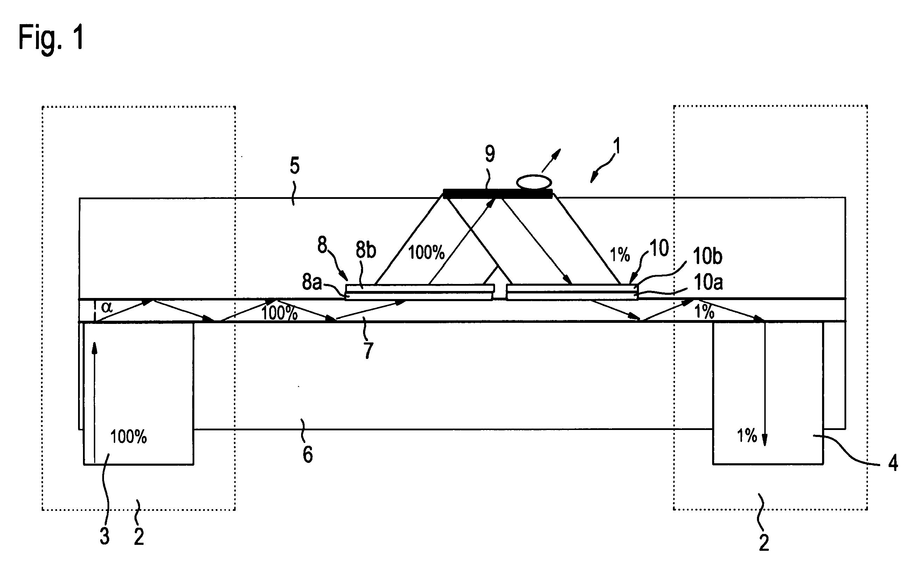

In Figur 1 ist schematisch eine Windschutzscheibe 1 dargestellt, die in einer Windschutzscheibenhalterung 2 gehalten ist. In der Halterung 2 befindet sich an verschiedenen Stellen eine Strahlungsquelle 3 und ein Strahlungsdetektor 4. Die Windschutzscheibe 1 ist als Sicherheitsglasscheibe ausgebildet, d.h. sie weist eine erste Glasschicht 5 und eine zweite Glasschicht 6 auf, zwischen denen eine PVB-Folie angeordnet ist. Die PVB-Folie dient in erster Linie dazu, bei einem Zerbrechen der Windschutzscheibe 1 ein Zersplittern zu verhindern.

Ein Abschnitt der Windschutzscheibe 1 befindet sich in der Halterung 2, wobei die Strahlungsquelle 3 so in der Windschutzscheibe in der Halterung 2 angeordnet ist, dass ein von der Strahlungsquelle 3 emittierter Lichtstrahl bzw. ein Strahlbündel so in die PVB-Folie 7 geleitet wird, dass die PVB-Folie als Lichtwellenleiter 7 den Lichtstrahl leitet. Der Strahlungsdetektor 4 ist in der Halterung 2 ebenfalls so mit der PVB-Folie 7 gekoppelt, dass der dort ankommende Lichtstrahl aus der PVB-Folie ausgekoppelt wird und durch den Strahlungsdetektor 4 detektiert werden kann .

Die Strahlungsquelle 3 und der Strahlungsdetektor 4 sind so an der Windschutzscheibe 1 und in der Halterung 2 angeordnet, dass die Strahlungsquelle 3 den Lichtstrahl im Wesentlichen in Richtung des Strahlungsdetektors richtet. Der Lichtstrahl in dem Lichtwellenleiter 7 ist als Pfeil dargestellt. Damit das Licht innerhalb des Lichtwellenleiters 7 geführt wird, ist ein vom Verhältnis der Brechzahl des Lichtwellenleiters und der Glasscheiben 5, 6 abhängiger minimaler Winkel notwendig, mit dem die Strahlungsquelle 3 den Lichtstrahl in den Lichtwellenleiter 7 einkoppelt.

An einer auf der Windschutzscheibe 1 definierten Sensorposition befindet sich auf dem Lichtwellenleiter 7 ein Auskopplungshologramm 8, das den in dem Lichtwellenleiter 7 geführten Lichtstrahl auskoppelt und auf einen Oberflächenbereich 9 richtet. Das Auskopplungshologramm 8 weist im dargestellten Beispiel zwei Schichten auf, eine Zuführungsschicht 8a und eine Ablenkungsschicht 8b, in der die Brechzahl lokal geändert ist, um eine holografische Struktur zu schaffen und dadurch die Ablenkung des Lichtstrahls zu erreichen. Selbstverständlich ist die Realisierung des Auskopplungshologramms 8 beliebig und kann auch mehr oder weniger Schichten aufweisen. Der ausgekoppelte Lichtstrahl wird mit einem Winkel auf den Oberflächenbereich 9 gelenkt, der größer ist als der Winkel der Totalreflexion an dem Oberflächenbereich 9, so dass im trockenen Zustand des Oberflächenbereichs 9 der ausgekoppelte Lichtstrahl im Wesentlichen vollständig an dem Oberflächenbereich 9 reflektiert wird und in einem Einkopplungsbereich, an dem sich ein Einkopplungshologramm 10 befindet, das im dargestellten Beispiel ebenfalls zwei dem Auskopplungshologramm 8 entsprechende Schichten 10a, 10b aufweist in den Lichtwellenleiter 7 eingekoppelt wird.

Ist der Oberflächenbereich 9 beschlagen, d.h. es befinden sich beispielsweise Wassertropfen auf dem Oberflächenbereich 9, so wird der Winkel der Totalreflexion verändert und ein Teil des ausgekoppelten Lichtstrahls wird in die Umgebung abgegeben und kein oder ein reduzierter Anteil des ausgekoppelten Lichtstrahls wird reflektiert und wieder in den Lichtwellenleiter 7 eingekoppelt.

Um eine Beeinträchtigung der Sicht des Fahrers des Kraftfahrzeugs, an dem sich die Windschutzscheibe 1 befindet, zu vermeiden, wird der Lichtstrahl als Lichtstrahl in einem nicht sichtbaren Wellenlängenbereich, vorzugsweise in einem infraroten Wellenlängenbereich, gewählt. Durch die Verwendung von infrarotem Licht kann auch ein störender Einfluss des einfallenden Fremdlichts reduziert werden, wenn Strahlungsdetektor 4 vorwiegend im infraroten Wellenlängenbereich empfindlich ist. Der Lichtwellenleiter 7 ist ausgebildet, um den Lichtstrahl mit dem ausgewählten Wellenlängenbereich möglichst dämpfungsfrei zu leiten. Die Glasscheiben 5, 6 weisen jedoch üblicherweise eine sehr starke Dämpfung für Licht im infraroten Wellenlängenbereich auf, so dass in dem in Figur 1 gezeigten Beispiel der ausgekoppelte Lichtstrahl, der durch die erste Glasscheibe 5 zum Oberflächenbereich 9 geführt wird, dort reflektiert wird und durch die Glasscheibe 5 zum Einkopplungsbereich 10 zurückgeführt wird, stark gedämpft wird. Bei einer herkömmlichen Windschutzscheibe kann so beispielsweise ein an dem Oberflächenbereich 9 vollständig reflektierter ausgekoppelter Lichtstrahl, z. B. etwa 1% der Lichtstärke des ausgekoppelten Lichtstrahls, aufweisen.

Da deshalb nur ein geringer Anteil des eingekoppelten Lichts nach dem Leiten durch die erste Glasscheibe 5 wieder in den Lichtwellenleiter 7 eingekoppelt werden kann, muss der Strahlungsdetektor 4 sehr empfindlich sein, um die verbleibende Lichtstärke des Lichtstrahls detektieren zu können und insbesondere die durch das Maß an Beschlag auf dem Oberflächenbereich 9 hervorgerufenen Schwankungen erkennen zu können. Auch sollte der Strahlungsdetektor 4 so gestaltet sein, dass einfallendes Fremdlicht die Empfindlichkeit möglichst wenig beeinträchtigt. Ferner ist der Arbeitsbereich des Strahlungsdetektors 4 entsprechend der geringen Lichtstärke zu wählen. Solche Strahlungsdetektoren sind teuer und aufwändig herzustellen.

Die Verwendung eines Hologramms zur Auskopplung des Lichtstrahls führt dazu, dass der gesamte im Lichtwellenleiter 7 geführte Lichtstrahl in die erste Glasscheibe 5 ausgekoppelt und auf den Oberflächenbereich 9 gelenkt wird. Im Lichtwellenleiter 7 des Beispiels der Figur 1 verbleibt in Strahlrichtung hinter dem Auskopplungshologramm 8 kein Lichtstrahl.

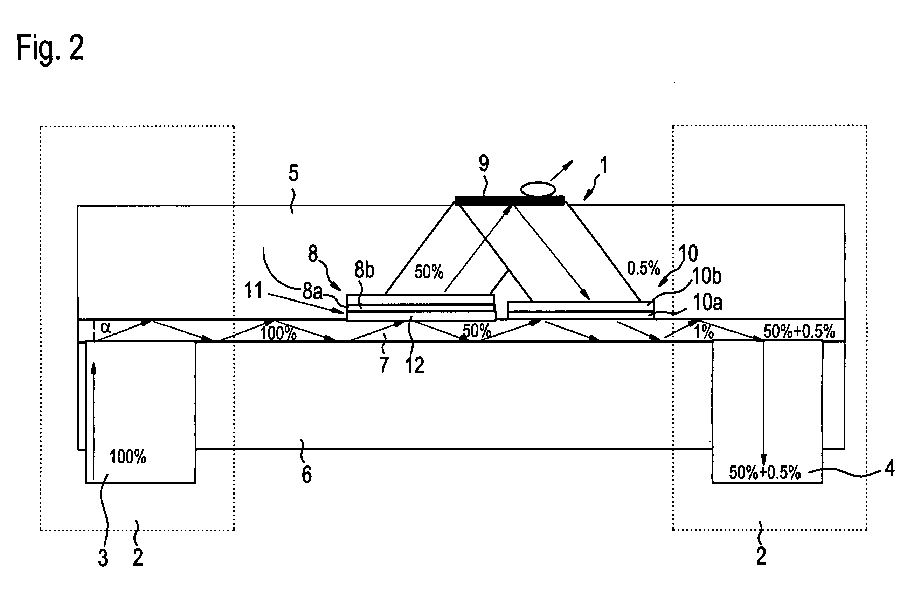

In Fig. 2 ist eine Ausführungsform der Erfindung dargestellt. Gleiche Bezugszeichen bezeichnen Elemente gleicher oder vergleichbarer Funktion. In dieser Ausführungsform der Figur 2 ist vorgesehen, dass im Auskopplungsbereich nur ein Teil des im Lichtwellenleier 7 geführten Lichtstrahls vorzugsweise zwischen 30 und 70 % der Lichtstärke des ursprünglichen eingekoppelten Lichtstrahls ausgekoppelt wird und auf den Oberflächenbereich 9 geleitet wird. Wenn, wie im dargestellten Beispiel, 50% des im Lichtwellenleiter 7 geführten Lichtstrahls ausgekoppelt werden, verbleiben im Lichtwellenleiter 50% der Lichtstärke des Lichtstrahls. In diesem Fall beträgt bei einer Windschutzscheibe 1 in einer zu Fig. 1 vergleichbaren Bauart die Lichtstärke des reflektierten Lichtstrahls am Einkopplungsbereich nur noch 0,5% der Lichtstärke des ursprünglich im Lichtwellenleiter geführten Lichtstrahls. Der reflektierte Lichtstrahl wird eingekoppelt und somit zu der Lichtstärke des im Lichtwellenleiter 7 verbliebenen Lichtstrahls hinzuaddiert. Der am Strahlungsdetektor 4 empfangene Lichtstrahl weist somit im Mittel ca. 50,5% der Lichtstärke des von der Strahlungsquelle 3 ausgesandten Lichtstrahls aus. Bei geeigneter Wahl des Strahlungsdetektors 4 kann dadurch der Strahlungsdetektor 4 durch die empfangene Lichtstärke in einem optimalen Arbeitsbereich betrieben werden, wodurch die Empfindlichkeit des Strahlungsdetektors 4 stark erhöht werden kann.

Um den Strahlungsdetektor 4 bei dem Sensor der Figur 1 in einem optimalen Arbeitsbereich zu betreiben, müsste die Strahlungsquelle einen Lichtstrahl mit hoher Lichtstärke ausgeben, wodurch die Realisierung der Strahlungsquelle 3 erheblich erschwert wird und sich die Baugröße der Strahlungsquelle 3 so vergrößert, dass diese in der Halterung 2 keinen Platz mehr findet. Zudem würde die Lichtstärke des Lichtstrahls bei starkem Beschlag auf der Oberfläche der Windschutzscheibe 1 stark verringert, so dass ein Ansteuern in einem optimalem Arbeitsbereich nicht gewährleistet wäre.

Um nur einen Teil des in den Lichtwellenleiter 7 geführten Lichtstrahls in dem Auskopplungsbereich auszukoppeln, ist eine Tunnelstruktur 11 im Auskopplungsbereich vorgesehen, der in Form einer Tunnelschicht 12 geringer Dicke ausgebildet ist. Die Tunnelstruktur ermöglicht ein optisches Tunneln und ermöglicht ein gezieltes Auskoppeln eines vorbestimmten Anteils des Lichtstrahls. Die Tunnelschicht kann als eine dielektrische Schicht, metallische Schicht oder eine sonstige Schicht ausgebildet sein, durch die ein anteiliges Auskoppeln ermöglicht wird. Bei der Verwendung von metallischen Schichten können Resonanzeffekte genutzt werden (plasmonische Schwingungen) .

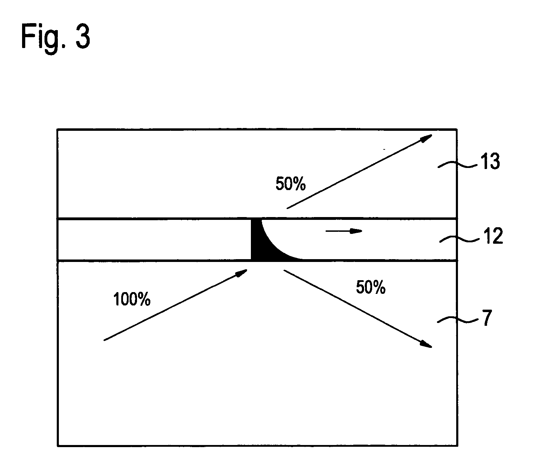

In Figur 3 ist der Aufbau der Windschutzscheibe 1 im Auskopplungsbereich vergrößert dargestellt. Unmittelbar auf dem Lichtwellenleiter 7 befindet sich die Tunnelschicht 12, auf der eine weitere lichtdurchlässige Schicht 13 aufgebracht ist. Vorzugsweise kann das Auskopplungshologramm 8 unmittelbar auf der Tunnelschicht 12 angeordnet werden, so dass die weitere Schicht 13 in diesem Fall mit der Zuleitungsschicht 8a identisch ist. Die optischen Brechzahlen des Lichtwellenleiters 7 und der weiteren Schicht 13 sind größer als die Brechzahl der Tunnelschicht 12. Die weitere Schicht 13 kann auch durch einen Teil der ersten Glasscheibe 5 gebildet sein. Da die Lichtwellen des Lichtstrahls in dem Lichtwellenleiter 7 in einem größeren Winkel als der Winkel der Totalreflexion geführt werden, würde an der Grenzfläche zwischen dem Lichtwellenleiter 7 und der Tunnelschicht 12 der geführte Lichtstrahl vollständig reflektiert werden. Da die Tunnelschicht 12 mit einer sehr geringen Dicke ausgeführt ist, tritt ein optischer Tunneleffekt auf. Es bildet sich in der Tunnelschicht 12 eine evaneszente Welle aus, deren Intensität in Fig. 3 durch die exponentiell mit dem Abstand von der Grenzfläche abfallenden Kurve veranschaulicht ist. An der Grenzfläche zwischen der Tunnelschicht 12 und der weiteren Schicht 13 wird ein Lichtstrahl abgegeben, dessen Lichtstärke von der Dicke der Tunnelschicht 12 und von der Lichtstärke des in den Lichtwellenleiter 7 geführten Lichts abhängt. Um nur einen bestimmten Anteil des in dem Lichtwellenleiter 7 geführten Lichtstrahls auszukoppeln, kann die Dicke der Tunnelschicht 12 genau so gewählt werden, dass der entsprechende Anteil ausgekoppelt wird und der restliche Anteil des Lichtstrahls in dem Lichtwellenleiter 7 verbleibt. Je nach Größe des vorbestimmten Anteils des ausgekoppelten Lichtstrahls beträgt die Dicke der Tunnelschicht nur wenige 100 nm. In dem in Figur 3 dargestellten Beispiel beträgt der Anteil der Lichtstärke des ausgekoppelten Lichtstrahls und des in dem Lichtwellenleiter 7 verbleibenden Lichtstrahls 1:1, es können jedoch auch andere Anteilsverhältnisse ausgewählt werden.

Es ist wünschenswert, die sensitive Fläche der Sensoranordnung möglichst zu vergrößern. Eine Vergrößerung der sensitiven Fläche ist nicht auf einfache Weise zu realisieren. Es ist nur mit erheblichem technischen Aufwand möglich, in der Halterung der Windschutzscheibe eine weitaus gedehnte Strahlungsquelle anzuordnen und das emittierte Licht nach Durchgang durch die Windschutzscheibe wieder auf einen geeigneten Strahlungsdetektor zu fokussieren. Alternativ wäre es möglich, den Winkel mit dem der Lichtstrahl in dem Lichtwellenleiter 7 geführt wird, auf nahezu 90° zu erhöhen, wobei jedoch bei den verfügbaren Auskopplungselementen, wie z.B. dem Auskopplungshologramm 8, es nicht möglich ist, da das Licht lange Wege durch das Auskopplungshologramm zurücklegen müsste, was zu weiteren Intensitätsverlusten des Lichtstrahls führen würde. Daher können auch aufgrund der Tatsache, dass die PVB-Folie, die üblicherweise als Lichtwellenleiter 7 verwendet wird, sehr dünn ist (ca. 760 µm), derzeit nur sehr kleine sensitive Flächen von ca. 10 mm² realisiert werden. Für eine zuverlässige statistische Auswertung unterschiedlicher Regensituationen ist jedoch eine Fläche von ca. 200 mm² erforderlich.

Eine Vergrößerung der sensitiven Fläche kann in einfacher Weise dadurch ausgeführt werden, indem der Lichtstrahl mehrfach ausgekoppelt und wieder eingekoppelt wird, so dass mehrere Oberflächenbereiche vorhanden sind, auf denen das Maß an Beschlag detektiert werden kann. Würde jedoch der Lichtstrahl bei der beispielhaften Sensoranordnung in der Windschutzscheibe, die in Figur 1 gezeigt ist, mehrfach ausgekoppelt und wieder eingekoppelt werden, so wäre die verbleibende Lichtstärke, die durch den Strahlungsdetektor 4 empfangen werden könnte, durch die Dämpfung in der Glasscheibe 5 sehr gering, so dass der Strahlungsdetektor weder in einem optimalen Arbeitsbereich betrieben werden kann, noch die absoluten Lichtstärkeschwankungen ausreichend groß wären, um mit herkömmlichen Strahlungsdetektoren zuverlässige Messergebnisse zu erhalten. Als optimaler Arbeitsbereich kann je nach Anwendung ein linearer Bereich der Detektorkennlinie für eine Messwertbestimmung oder ein sehr steiler Bereich der Kennlinie für eine maximale Empfindlichkeit gewählt werden.

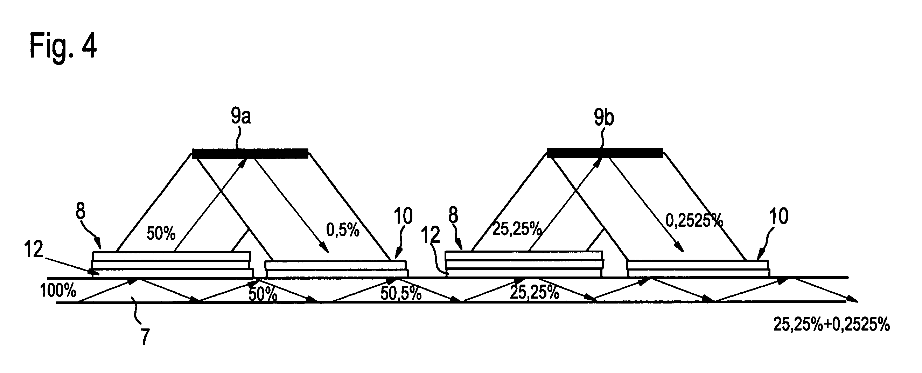

In einer Abwandlung der Sensoranordnung der Figur 2 können, wie in Figur 4 dargestellt, mehrere Auskopplungs- und Einkopplungsbereiche an dem Lichtwellenleiter 7 hintereinander angeordnet werden, wobei im gezeigten Beispiel jeder der Auskopplungsbereiche 50% der Lichtstärke des im Lichtwellenleiter 7 im Auskopplungsbereich befindlichen Lichtstrahls auskoppelt, auf den jeweiligen Oberflächenbereich 9a, 9b leitet und anschließend den reflektierten Anteil des ausgekoppelten Lichtstrahls wieder in den Lichtwellenleiter einkoppelt. Wie man in Figur 4 erkennen kann, beträgt die Lichtstärke des nach zwei hintereinander angeordneten optischen Sensoren im Lichtwellenleiter 7 noch verbleibenden Lichtstrahls ca. 25% der ursprünglichen Lichtstärke des ursprünglichen Lichtstrahls. Besonders wichtig ist, dass der Anteil des Lichts, welches über die Oberflächenbereiche 9a und b geführt wird, relativ hoch ist, da nur mit diesem Licht Feuchtigkeit detektiert werden kann. Dieser Anteil beträgt im beschriebenen Ausführungsbeispiel 0,2525%. Ohne die Strahlauskopplung mit Hilfe der Tunnelschichten würde dieser Anteil bei gleichen optischen Scheibeneigenschaften nur 0,01% betragen. Der Gewinn bezüglich dieser Lichtintensität steigt mit der Anzahl der sensitiven Flächen.

Die restliche Lichtstärke ist ausreichend, um einen Strahlungsdetektor 4 so auszuwählen, dass er in einem optimalen Arbeitsbereich (maximale Empfindlichkeit) betrieben wird. Auch lässt sich durch die Vervielfachung der Oberflächenbereiche durch die mehreren optischen Sensoren die Empfindlichkeit und die Zuverlässigkeit der detektierten Größen erhöhen. Der vorbestimmte Anteil des auszukoppelnden Lichtstrahls kann nahezu beliebig eingestellt werden (durch die Dicke der Tunnelschicht) und wird vorzugsweise abhängig von der Anzahl der hintereinander angeordneten Sensoren und/oder abhängig von der sensitiven Fläche jedes der Sensoren gewählt.

Um nach dem Auskoppeln des vorbestimmten Anteils des Lichtstrahls aus dem Lichtwellenleiter 7 den ausgekoppelten Lichtstrahl zuverlässig auf den Oberflächenbereich 9 zu lenken, ist auf der weiteren Schicht ein Ablenkbereich aufgebracht, der den Lichtstrahl auf den Oberflächenbereich in einem Winkel lenkt, der größer ist, als der Winkel der Totalreflexion an der Oberfläche der Windschutzscheibe. Der Ablenkbereich ist vorzugsweise als das Auskopplungshologramm 8 ausgebildet. Der Einkopplungsbereich ist in der Ausführungsform der Figur 2 in gleicher Weise ausgebildet, wie in dem Beispiel bei der Figur 1, z.B. durch das Einkopplungshologramm 10.

Die Tunnelschicht 12 kann beispielsweise hergestellt werden, indem die Glasscheibe 5, auf der an den entsprechenden Bereichen das Hologramm 8 und die weitere Schicht 13 aufgebracht sind, die Tunnelschicht durch Sputtern oder Tauchbeschichtung aufgebracht wird. Beim Tauchbeschichten kann die Tunnelschicht durch das Eintauchen in eine Teflonlösung aufgetragen werden. Alternativ ist es auch möglich, die zweite Glasscheibe 6 mit dem Lichtwellenleiter 7, vorzugsweise eine PVB-Schicht, zu beschichten, zu bekleben oder in sonstiger Weise zu versehen, und anschließend die Tunnelschicht 12 mit konstanter Dicke auf die gesamte PVB-Folie aufzutragen. Im Auskopplungsbereich und im Einkopplungsbereich muss die Tunnelschicht 12 entsprechend gedünnt werden und anschließend mit einer Ablenkstruktur, wie z.B. einer holografischen Struktur 8, 10 versehen werden. In diesem Fall muss zwar die Tunnelschicht 12 unterhalb der Hologramme 8, 10 dünn genug für eine teilweise Lichtauskopplung sein, außerhalb des Auskopplungsbereiches hingegen so dick sein, dass keine Lichtverluste durch unerwünschte Auskopplungen auftreten können.

Wenn die Hologramme 8, 10 zuvor auf die erste Glasscheibe 1 aufgebracht worden sind, kann dann die zweite Glasscheibe 6 mithilfe des sogenannten Autoclave-Prozesses bei hoher Temperatur und hohem Druck mit der ersten Glasscheibe 5, der PVB-Schicht und der Tunnelschicht 12 verbunden werden. Da die Hologramme auf der ersten Glasscheibe 5 durch ihre Eigendicke etwas von der Oberfläche der ersten Glasscheibe hervorstehen, ist bei diesem Prozess ein Zusammendrücken der Tunnelschicht 12 zu erwarten, da im Bereich der Hologramme 8, 10 ein höherer Druck auf die Tunnelschicht zu erwarten ist, wodurch die Tunnelschicht dort stärker zusammen gedrückt wird und deswegen dort dünner ausgebildet wird.

Selbstverständlich ist es auch möglich, als Lichtwellenleiter eine andere Art von Material als PVB zu verwenden. Das Material sollte jedoch geeignet sein, einen Lichtstrahl im infraroten Wellenlängenbereich gut und möglichst dämpfungsfrei zu leiten und insbesondere eine höhere Brechzahl aufweisen, als die ersten und zweite Glasscheibe 5, 6, so dass ein Lichtwellenleiter zwischen beiden Glasscheiben gebildet wird.

## Patentansprüche

1. Optischer Sensor zum Detektieren von Beschlag auf einem Oberflächenbereich, insbesondere auf einem Bereich einer Windschutzscheibe (1),
mit einem Lichtwellenleiter (7) zum Führen eines Lichtstrahls;
mit einem Auskopplungsbereich zum Auskoppeln des Lichtstrahls aus dem Lichtwellenleiter (7), wobei der ausgekoppelte Lichtstrahl abhängig von einem Maß an Beschlag auf dem Oberflächenbereich reflektiert wird;
mit einem Einkopplungsbereich zum Einkoppeln des reflektierten Lichtstrahls in den Lichtwellenleiter (7), **dadurch gekennzeichnet, dass**
der Auskopplungsbereich so gestaltet ist, dass nur ein vorbestimmter Anteil des im Lichtwellenleiter (7) geführten Lichtstrahls zum Reflektieren an dem Oberflächenbereich ausgekoppelt wird und ein weiterer Anteil des geführten Lichtstrahls im Lichtwellenleiter (7) verbleibt.

2. Sensor nach Anspruch 1, **dadurch gekennzeichnet, dass** der Auskopplungsbereich eine Tunnelstruktur aufweist, die auf dem Lichtwellenleiter (7) angeordnet ist, wobei die Tunnelstruktur so gestaltet ist, dass eine evaneszente Welle ausgebildet wird, wobei die Dicke der Tunnelstruktur so gewählt ist, dass nur der bestimmte Anteil des im Lichtwellenleiter (7) geführten Lichtstrahls ausgekoppelt wird.

3. Sensor nach Anspruch 1 oder 2, **dadurch gekennzeichnet, dass** der Lichtwellenleiter (7) zwischen zwei Glasscheiben (5, 6) angeordnet ist, wobei der Lichtwellenleiter (7) eine PVB-Schicht umfasst.

4. Sensor nach einem der Ansprüche 1 bis 3, wobei der Lichtwellenleiter zum Leiten von Licht in einem infraroten Wellenlängenbereich leitfähig ist.

5. Sensor nach einem der Ansprüche 1 bis 4, wobei der Auskopplungsbereich ein Ablenkelement (8) umfasst, das den ausgekoppelten Lichtstrahl in Richtung des Oberflächenbereichs ablenkt.

6. Sensor nach Anspruch 5, **dadurch gekennzeichnet, dass** das Ablenkelement (8) eine holographische Struktur aufweist.

7. Sensoranordnung mit mehreren Sensoren nach einem der Ansprüche 1 bis 6, **dadurch gekennzeichnet, dass** die mehreren Sensoren in Strahlrichtung des Lichtstrahls an einem gemeinsamen Lichtwellenleiter (7) in Reihe angeordnet sind.

8. Sensoranordnung nach Anspruch 6, **dadurch gekennzeichnet, dass** der Lichtwellenleiter (7) ein Lichteinkopplungsende zum Einkoppeln des Lichtstrahls und ein Lichtauskopplungsende zum Auskoppeln aufweist, wobei das Lichtauskopplungsende mit einem Strahlungsdetektor verbunden ist, um die Lichtintensität des an dem Auskopplungsende empfangbaren Lichtstrahls abhängig von dem Maß des Beschlags der Oberfläche zu messen.

9. Verfahren zum Bestimmen eines Maßes eines Beschlags auf einem Oberflächenbereich, **gekennzeichnet durch** die Verfahrensschritte:
Bereitstellen eines Lichtstrahls in einer Strahlführung;
a) Auskoppeln eines vorbestimmten Anteils des Lichtstrahls, so dass der ausgekoppelte Lichtstrahl an einem Oberflächenbereich reflektiert wird, wobei der reflektierte Anteil des Lichtstrahls von einem Maß des Beschlags abhängt;
b) Zusammenführen des nicht ausgekoppelten Anteils des Lichtstrahls und des reflektierten Anteil des Lichtstahls, um einen zusammengeführten Lichtstrahl zu erhalten;
c) Bestimmen des Maßes für den Beschlag abhängig von einer Messgröße des zusammengeführten Lichtstrahls.

10. Verfahren nach Anspruch 8, **gekennzeichnet durch** weitere Verfahrensschritte, wobei die Schritte b) und c) in mehreren Stufen nacheinander ausgeführt werden, wobei der jeweils bereitgestellte Lichtstrahl einer nachfolgenden Stufe dem zusammengeführten Lichtstrahl der vorhergehenden Stufe entspricht.

11. Verfahren zur Herstellung eines Sensors nach einem der Ansprüche 1 bis 5, **gekennzeichnet durch** die Verfahrensschritte:
- Bereitstellen eines Lichtwellenleiters (7);
- Aufbringen einer Tunnelschicht (12) auf den Lichtwellenleiter zum Bilden des Auskopplungsbereiches, wobei die Dicke der Tunnelschicht (12) so gewählt wird, dass nur ein vorbestimmter Anteil des im Lichtwellenleiter (7) geführten Lichtstrahls zum Reflektieren an dem Oberflächenbereich ausgekoppelt wird;
- Anordnen eines Trägermaterials auf den Lichtwellenleiter und auf die Tunnelschicht (12), wodurch der Oberflächenbereich gebildet wird, auf den der auszukoppelnde Lichtstrahl gerichtet ist.

12. Verfahren nach Anspruch 11, **dadurch gekennzeichnet, dass** nach dem Aufbringen der Tunnelschicht (12) und vor dem Anordnen des Trägermaterials eine Ablenkstruktur (15) vorgesehen wird, um den ausgekoppelten Lichtstrahl auf den Oberflächenbereich zu lenken.

13. Verfahren nach Anspruch 11 oder 12, wobei den Lichtwellenleiter auf ein weiteres Trägermaterial (5) aufgebracht wird.

14. Verfahren nach Anspruch 11, wobei das Anordnen des Trägermaterials auf dem Lichtwellenleiter und auf der Tunnelschicht (12) so durchgeführt wird, dass das Trägermaterial am Auskopplungsbereich mit einer Ablenkstruktur einer vorbestimmten Dicke versehen ist, wobei das Trägermaterial und der Lichtwellenleiter aufeinandergefügt werden und unter Druck miteinander so verbunden werden, dass die Dicke der Tunnelschicht (12) auf eine Dicke eingestellt wird, die von dem vorbestimmten Anteil bestimmt ist.

## Claims

1. Optical sensor for detecting condensation on a surface region, in particular on a region of a windscreen (1),
having an optical waveguide (7) for guiding a light beam;
having a coupling-out region for coupling the light beam out of the optical waveguide (7), the light beam which has been coupled out being reflected on the basis of an amount of condensation on the surface region;
having a coupling-in region for coupling the reflected light beam into the optical waveguide (7),
**characterized in that**
the coupling-out region is configured in such a manner that only a predetermined portion of the light beam guided in the optical waveguide (7) is coupled out for reflection at the surface region and a further portion of the guided light beam remains in the optical waveguide (7).

2. Sensor according to Claim 1, **characterized in that** the coupling-out region has a tunnel structure which is arranged on the optical waveguide (7), the tunnel structure being configured in such a manner that an evanescent wave is formed, the thickness of the tunnel structure being selected in such a manner that only the determined portion of the light beam guided in the optical waveguide (7) is coupled out.

3. Sensor according to Claim 1 or 2, **characterized in that** the optical waveguide (7) is arranged between two panes of glass (5, 6), the optical waveguide (7) comprising a PVB layer.

4. Sensor according to one of Claims 1 to 3, the optical waveguide being conductive in order to conduct light in an infrared wavelength range.

5. Sensor according to one of Claims 1 to 4, the coupling-out region comprising a deflecting element (8) which deflects the light beam which has been coupled out in the direction of the surface region.

6. Sensor according to Claim 5, **characterized in that** the deflecting element (8) has a holographic structure.

7. Sensor arrangement having a plurality of sensors according to one of Claims 1 to 6, **characterized in that** the plurality of sensors are arranged in series on a common optical waveguide (7) in the beam direction of the light beam.

8. Sensor arrangement according to Claim 6, **characterized in that** the optical waveguide (7) has a light coupling-in end for coupling in the light beam and a light coupling-out end for coupling out the light beam, the light coupling-out end being connected to a radiation detector in order to measure the light intensity of the light beam which can be received at the coupling-out end on the basis of the amount of condensation on the surface.

9. Method for determining an amount of condensation on a surface region, **characterized by** the method steps of:
providing a light beam in a beam guide;
a) coupling out a predetermined portion of the light beam, with the result that the light beam which has been coupled out is reflected at a surface region, the reflected portion of the light beam depending on an amount of condensation;
b) combining that portion of the light beam which has not been coupled out and the reflected portion of the light beam in order to obtain a combined light beam;
c) determining the amount of condensation on the basis of a measurement variable of the combined light beam.

10. Method according to Claim 8, **characterized by** further method steps, steps b) and c) being carried out in succession in a plurality of stages, the respectively provided light beam in a subsequent stage corresponding to the combined light beam in the preceding stage.

11. Method for producing a sensor according to one of Claims 1 to 5, **characterized by** the method steps of:
- providing an optical waveguide (7);
- applying a tunnel layer (12) to the optical waveguide in order to form the coupling-out region, the thickness of the tunnel layer (12) being selected in such a manner that only a predetermined portion of the light beam guided in the optical waveguide (7) is coupled out for reflection at the surface region;
- arranging a carrier material on the optical waveguide and on the tunnel layer (12), thus forming the surface region at which the light beam to be coupled out is aimed.

12. Method according to Claim 11, **characterized in that** a deflecting structure (15) is provided after the tunnel layer (12) has been applied and before the carrier material is arranged in order to direct the light beam which has been coupled out onto the surface region.

13. Method according to Claim 11 or 12, the optical waveguide being applied to a further carrier material (5).

14. Method according to Claim 11, the carrier material being arranged on the optical waveguide and on the tunnel layer (12) in such a manner that the carrier material in the coupling-out region is provided with a deflecting structure of a predetermined thickness, the carrier material and the optical waveguide being joined to one another and connected to one another under pressure in such a manner that the thickness of the tunnel layer (12) is adjusted to a thickness determined by the predetermined portion.

## Revendications

1. Détecteur optique destiné à détecter les précipitations sur une partie d'une surface, en particulier sur une partie d'un pare-brise (1), et présentant
un guide (7) d'ondes lumineuses qui conduit un faisceau lumineux,
une partie d'émission qui émet le faisceau lumineux provenant du guide (7) d'ondes lumineuses, le faisceau lumineux émis étant réfléchi en fonction du niveau de précipitation présent sur la partie de surface,
une unité d'injection qui injecte dans le guide (7) d'ondes lumineuses le faisceau lumineux réfléchi, **caractérisé en ce que**
la partie d'émission est configurée de telle sorte que seule une portion prédéterminée du faisceau lumineux guidé par le guide (7) d'ondes lumineuses est émise pour se réfléchir sur la partie de la surface et
**en ce qu'**une autre portion du faisceau lumineux guidé reste dans le guide (7) d'ondes lumineuses.

2. Détecteur selon la revendication 1, **caractérisé en ce que** la partie d'émission présente une structure en tunnel disposée sur le guide (7) d'ondes lumineuses, la structure en tunnel étant configurée de manière à former une onde évanescente, l'épaisseur de la structure en tunnel étant sélectionnée de telle sorte que seule une portion définie du faisceau lumineux guidé dans le guide (7) d'ondes lumineuses soit émise.

3. Détecteur selon la revendication 1 ou 2, **caractérisé en ce que** le guide (7) d'ondes lumineuses est disposé entre deux feuilles de vitrage (5, 6), le guide (7) d'ondes lumineuses comprenant une couche de PVB.

4. Détecteur selon l'une des revendications 1 à 3, dans lequel le guide d'ondes lumineuses est capable de guider la lumière dans une plage de longueurs d'onde infrarouges.

5. Détecteur selon l'une des revendications 1 à 4, dans lequel la partie d'émission comporte un élément de déviation (8) qui dévie en direction de la partie de la surface le faisceau lumineux émis.

6. Détecteur selon la revendication 5, **caractérisé en ce que** l'élément de déviation (8) présente une structure holographique.

7. Système de détection doté de plusieurs détecteurs selon l'une des revendications 1 à 6, **caractérisé en ce que** les différents détecteurs sont disposés sur un guide (7) commun d'ondes lumineuses en série dans la direction de propagation du faisceau lumineux.

8. Système de détection selon la revendication 6, **caractérisé en ce que** le guide (7) d'ondes lumineuses présente une extrémité d'entrée de lumière qui injecte le faisceau lumineux et une extrémité de sortie de lumière qui l'émet, l'extrémité de sortie de lumière étant reliée à un détecteur de rayonnement qui mesure l'intensité lumineuse du faisceau lumineux qui peut être reçu à l'extrémité d'émission en fonction du niveau de précipitation sur la surface.

9. Procédé de détermination du niveau de précipitation sur une partie d'une surface, **caractérisé par** les étapes qui consistent à :
préparer un faisceau lumineux dans un guide de faisceau,
a) émettre une portion prédéterminée du faisceau lumineux de telle sorte que le faisceau lumineux émis soit réfléchi sur une partie de la surface, la portion réfléchie du faisceau lumineux dépendant du niveau de précipitation,
b) rassembler la portion non émise du faisceau lumineux et la portion réfléchie du faisceau lumineux pour obtenir un faisceau lumineux rassemblé et
c) déterminer le niveau de précipitation en fonction d'une grandeur mesurée sur le faisceau lumineux rassemblé.

10. Procédé selon la revendication 8, **caractérisé par** d'autres étapes, les étape b) et c) étant exécutées successivement en plusieurs étages, le faisceau lumineux de chaque étage successif correspondant au faisceau lumineux rassemblé de l'étage précédent.

11. Procédé de fabrication d'un détecteur selon l'une des revendications 1 à 5, **caractérisé par** les étapes qui consistent à :
- préparer un guide (7) d'ondes lumineuses,
- appliquer une couche tunnel (12) sur le guide d'ondes lumineuses en vue de former la partie d'émission, l'épaisseur de la couche tunnel (12) étant sélectionnée de telle sorte que seule une portion prédéterminée du faisceau lumineux guidé dans le guide (7) d'ondes lumineuses soit émise pour se réfléchir sur la partie de la surface,
- disposer un matériau de support sur le guide d'ondes lumineuses et sur la couche tunnel (12), ce qui forme la partie de la surface sur laquelle le faisceau lumineux émis est orienté.

12. Procédé selon la revendication 11, **caractérisé en ce qu'**après l'application de la couche tunnel (12) et avant le placement du matériau de support, une structure de déviation (15) est prévue pour dévier sur la partie de la surface le faisceau lumineux émis.

13. Procédé selon la revendication 11 ou 12, dans lequel le guide d'ondes lumineuses est appliqué sur un autre matériau de support (5).

14. Procédé selon la revendication 11, dans lequel le placement du matériau de support sur le guide d'ondes lumineuses et sur la couche tunnel (12) est réalisé de telle sorte que le matériau de support soit doté sur la partie d'émission d'une structure de déviation d'une épaisseur prédéterminée, le matériau de support et le guide d'onde lumineuse étant réunis l'un à l'autre et reliés l'un à l'autre sous pression de telle sorte que l'épaisseur de la couche tunnel (12) soit réglée à une valeur qui est déterminée par la portion prédéterminée.
